# EUROPÄISCHE PATENTSCHRIFT

(11) **EP 2 400 200 B1**
(45) Veröffentlichungstag und Bekanntmachung des Hinweises auf die Patenterteilung: **26.11.2014**
(21) Anmeldenummer: 11171005.9
(22) Anmeldetag: 22.06.2011
(51) Int. Cl.: F16L 23/00, F16L 23/036, F16L 37/10, F16L 37/56

(54) **Multi-Kupplungseinheit mit Trägerplatten und Antriebsvorrichtung dafür**
Multi-coupling unit with carrier plate and drive device for same
Unité de couplage multiple dotée de plaques de support et dispositif d'entraînement associé

(30) Priorität: 25.06.2010 DE 102010025162
(43) Veröffentlichungstag der Anmeldung: 28.12.2011
(73) Patentinhaber: Parker Hannifin GmbH, 33659 Bielefeld (DE)
(72) Erfinder: Scheytt, Alexander, 75428 Illingen (DE); Nowak, Olaf, 73574 Iggingen (DE); Thum, Udo, 75446 Wiernsheim (DE)
(74) Vertreter: Müller, Karl-Ernst

(56) Entgegenhaltungen:
- EP-A2- 1 106 898
- WO-A1-2008/063131
- DE-U1- 20 204 242
- US-A- 2 967 069
- US-A- 3 826 522
- US-A- 5 098 312
- US-A1- 2006 065 122

## Beschreibung

Die Erfindung betrifft eine Multi-Kupplungseinheit für die Kupplung von Komponenten wie Rohrleitungen, Schläuchen, Messleitungen und ähnlichem miteinander umfassend zwei miteinander verbindbare Trägerplatten als Träger der durch die Betätigung eines einen Bestandteil der Multi-Kupplungseinheit bildenden Werkzeuges zusammenzufahrenden und dadurch zu verbindenden Komponenten, wobei in dem zwischen den Trägerplatten auch bei gekuppelten Komponenten verbleibenden Zwischenraum eine aus zwei jeweils an den Trägerplatten angeordneten Gewindeteilen bestehende Antriebsvorrichtung für das Zusammenfahren der Trägerplatten und deren bei gekuppelten Komponenten bewirkte Verbindung miteinander vorgesehen ist, wobei ein Gewindeteil feststehend mit einer Trägerplatte verbunden und das andere Gewindeteil drehbar, aber axial unverschiebbar an der anderen Trägerplatte angeordnet ist, und das drehbar angeordnete Gewindeteil von dem an das Gewindeteil angesetzten Werkzeug beaufschlagt ist und durch das mittels der Verschwenkung des Werkzeuges bewirkte Ineinanderschrauben der Gewindeteile der Abstand der Trägerplatten zueinander zwischen einer Freigabestellung und einer die Kupplung der an den Trägerplatten angebrachten Komponenten miteinander bewirkenden Kupplungsstellung veränderbar ist.

Eine Multi-Kupplungseinheit mit den vorgenannten, gattungsgemäßen Merkmalen ist aus der US 3,229,656 bekannt. Soweit die beiden Trägerplatten mittels einer zwischen ihnen angeordneten Gewindeeinrichtung zusammenzufahren sind, ist für das Ansetzen des die Drehung des drehbaren Gewindeteils bewirkenden Werkzeuges ein über die zugeordnete Trägerplatte nach außen überstehender Ansatz des drehbaren Gewindeteils vorgesehen. Das Werkzeug wird somit auf der Außenseite der Trägerplatten auf diesen Ansatz aufgesetzt, so dass durch Verschwenken des Werkzeuges das drehbare Gewindeteil verdreht werden kann. Mit der bekannten Multi-Kupplungseinheit ist der Nachteil verbunden, dass je nach der Einbausituation der Multi-Kupplungseinheit der Zugang für das Ansetzen des Werkzeuges außerhalb der Trägerplatten erschwert sein kann.

Weiterhin ist aus der US 4,615,546 eine Multi-Kupplungseinheit bekannt, bei welcher die beiden Trägerplatten federnd gegeneinander beweglich sind, wobei ein seitlich an einer Trägerplatte angeordneter Exzentertrieb vorgesehen ist, um die Bewegung der einen Trägerplatte gegenüber der anderen Trägerplatte herbeizuführen. Das hierfür erforderliche Werkzeug greift ebenfalls außerhalb der Trägerplatten an dem seitlich angebrachten Exzentertrieb an und ist zudem orthogonal zu der Ebene der Trägerplatten schwenkbar. Auch hierfür gilt der Nachteil, dass ein entsprechender Platzbedarf für die Anordnung des Exzentertriebes und den Angriff des Werkzeuges erforderlich ist.

Die aus der WO 2008/063131 A1 bekannte Multi-Kupplungseinheit weist einen vergleichbaren Aufbau mit zwei gegeneinander zu verfahrenden Trägerplatten und einer dazwischen angeordneten Antriebsvorrichtung auf, jedoch ist das die Antriebsvorrichtung antreibende Werkzeug fester Bestandteil einer drehbaren, einen Teil der Antriebsvorrichtung bildenden Hülse.

Dabei soll das Werkzeug in einer entsprechenden Position mittels eines Hakenschlosses festlegbar sein. Bei der bekannten Multi-Kupplungseinheit ist insoweit ein ständiger, auch unbefugter Zugriff auf das Werkzeug gegeben, und die Multi-Kupplungseinheit weist eine entsprechend große Bauhöhe auf.

Auch bei der in der US 2006/0065122 A1 beschriebenen Kupplung ist das Werkzeug fester Bestandteil einer der beiden Kupplungseinheiten.

Schließlich ist bei der aus der EP 1 106 898 A2 bekannten Multi-Kupplungseinheit die Antriebsvorrichtung für das Zusammenfahren bzw. Auseinanderfahren der beiden Trägerplatten als hydraulischer Antrieb ausgebildet, so dass diese Multi-Kupplungseinheit einer mechanisch angetriebenen und mittels eines Werkzeuges betätigten Multi-Kupplungseinheit nicht vergleichbar ist.

Der Erfindung liegt die Aufgabe zugrunde, eine Multi-Kupplungseinheit mit den gattungsgemäßen Merkmalen mit der Möglichkeit eines platzsparenden Werkzeugeingriffs zu versehen.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die Antriebsvorrichtung für das Zusammenfahren der Trägerplatten von einem in dem Zwischenraum zwischen den Trägerplatten angeordneten und das drehbare Gewindeteil beaufschlagenden Antriebsring gebildet ist und das in dem zwischen den Trägerplatten befindlichen Raum eingesetzte Werkzeug an dem Antriebsring angreift. Mit der Erfindung ist somit der Vorteil verbunden, dass außerhalb der beiden Trägerplatten kein Raum vorgehalten werden muss, der für den Angriff des Werkzeuges erforderlich ist. Vielmehr wird das Werkzeug in den ohnehin zwischen den Trägerplatten befindlichen Raum eingesteckt und dort an dem diesbezüglichen Antriebsring angesetzt, der für eine Drehung des drehbaren Gewindeteils sorgt.

Soweit der Abstand der Trägerplatten vergleichsweise groß ist beziehungsweise eine noch zu realisierende Gewindesteigung ein Zusammenfahren der Trägerplatten über einen großen Abstand nicht ermöglicht, ist in der Ausführungsform der Erfindung vorgesehen, dass zwischen dem Antriebsring und dem drehbaren Gewindeteil ein Übersetzungsgetriebe angeordnet ist derart, dass eine Verschwenkung des Werkzeuges und die dadurch bewirkte Verdrehung des drehbaren Gewindeteils den veränderbaren Abstand der Trägerplatten zueinander abdecken.

Nach einem Ausführungsbeispiel der Erfindung ist vorgesehen, dass das feststehend an einer Trägerplatte angebrachte Gewindeteil aus einem mit Außengewinde versehenen Zapfen besteht, dem als an der anderen Trägerplatte vorgesehenem Gewindeteil eine drehbar an der Trägerplatte gehalterte Hülse mit Innengewinde zugeordnet ist.

Um das Zusammenfahren der Trägerplatten zu bewirken, kann vorgesehen sein, dass die Steigung der Gewinde von Zapfen und Hülse eine derartige Steilheit aufweist, dass eine Verdrehung der Hülse um bis zu 90° den veränderbaren Abstand der Trägerplatten zueinander abdeckt.

Um bei in der Kupplungsstellung befindlichen Trägerplatten im Betrieb der Multi-Kupplungseinheit auftretenden Vibrationen ein selbsttätiges Öffnen der Trägerplatten zu vermeiden, kann vorgesehen sein, dass eine Sicherungsvorrichtung zum Festlegen der Hülse in deren bei in die Kupplungsstellung zusammengefahrenen Trägerplatten gegebenen Drehstellung vorgesehen ist.

In einer zweckmäßigen Ausführungsform der Erfindung ist hierzu vorgesehen, dass in der Antriebsvorrichtung ein durch das Einstecken des Werkzeuges in einen zugeordneten Ansatz eines Antriebsringes als Teil des Übersetzungsgetriebes beaufschlagbares Sicherungselement vorgesehen ist, welches in der eingesteckten Stellung des Werkzeuges die Drehung des Antriebsringes freigibt und bei abgenommenem Werkzeug mit dem Antriebsring verrastet und dadurch die Hülse fixiert.

Um eine bessere Führung der Trägerplatten bei deren Zusammenfahren sicherzustellen, ist nach einem Ausführungsbeispiel der Erfindung vorgesehen, dass an einer Trägerplatte zwei einander gegenüberliegend angeordnete Führungsstangen angebracht sind, die durch in der anderen Trägerplatte ausgebildete Durchführungen hindurchführbar sind.

In der Zeichnung ist ein Ausführungsbeispiel der Erfindung wiedergegeben, welches nachstehend beschrieben ist. Es zeigen:
- Fig. 1: die Trägerplatten einer Multi-Kupplungseinheit ohne daran angebaute Komponenten sowie die zwischen den Trägerplatten angeordnete Antriebsvorrichtung in einer isometrischen, auseinandergezogenen Darstellung ihrer Einzelteile,
- Fig. 2: die zusammengebaute Multi-Kupplungseinheit gemäß Figur 1 mit zusammengefahrenen Trägerplatten bei angesetztem Werkzeug in einer Schnittdarstellung.

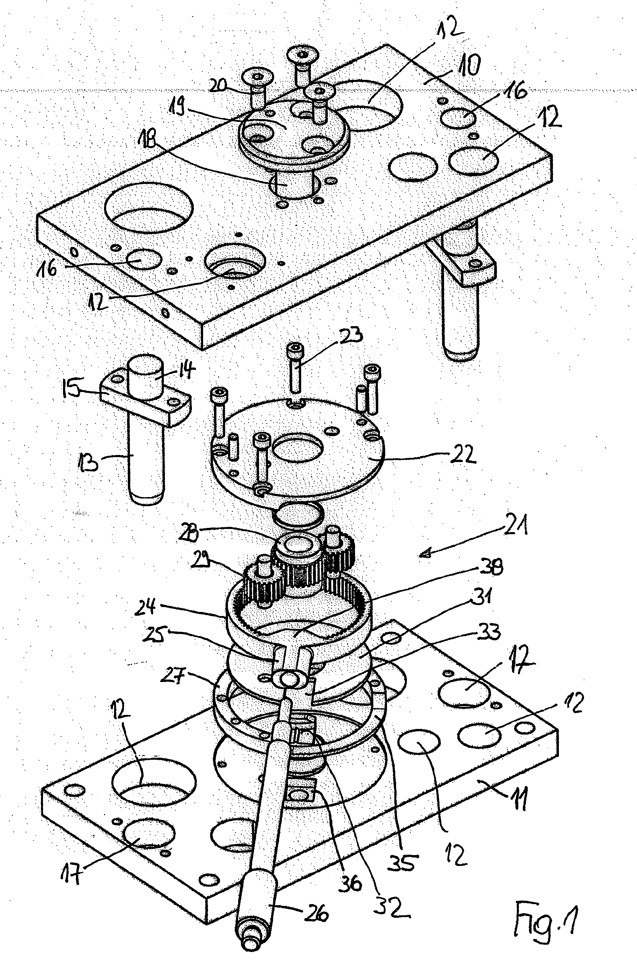

Aus Figur 1 sind eine obere Trägerplatte 10 und eine untere Trägerplatte 11 ersichtlich, die mit einer Mehrzahl von Bohrungen 12 zur Aufnahme von miteinander zu kuppelnden Komponenten als Bestandteil der Multi-Kupplungseinheit versehen sind. Da es für die Verwirklichung der Erfindung auf die Ausgestaltung der Komponenten beziehungsweise von deren Teilen und die Kupplung dieser Teile im Einzelnen nicht ankommt, ist auf die Darstellung der Komponenten verzichtet.

An der oberen Trägerplatte 10 sind Führungsstangen 13 angeordnet, die mit einem Absatz 14 in in der oberen Trägerplatte 10 ausgebildeten Aufnahmeöffnungen 16 eingesetzt und darin über an den Führungsstangen 13 angebrachte Befestigungsansätze 15 befestigt sind. Den Führungsstangen 13 sind in der unteren Trägerplatte 11 Durchführungen 17 zugeordnet.

Zur Ausbildung der erfindungsgemäßen Antriebsvorrichtung ist an der oberen Trägerplatte 10 ein mit einem nicht weiter erkennbaren Außengewinde versehener Zapfen 18 angebracht, indem eine den Zapfen 18 tragende Befestigungsplatte 19 mittels Befestigungsschrauben 20 an der oberen Trägerplatte 10 befestigt ist.

An der unteren Trägerplatte 11 ist eine Hülseneinheit 21 derart angeordnet, dass die mit dem Zapfen 18 zusammenwirkende Hülseneinheit 21 in einem auch bei in der Kupplungsstellung befindlichen Trägerplatten 10, 11 verbleibenden Zwischenraum zwischen oberer Trägerplatte 10 und unterer Trägerplatte 11 angeordnet ist. Die Hülseneinheit 21 weist eine einerseits mit einer auf die Außenverzahnung des Zapfens 18 abgestimmten und nicht erkennbaren Innenverzahnung und andererseits mit einer zu ihrem Antrieb dienenden Außenverzahnung versehene Hülse 28 auf, die drehbar, aber axial unverschiebbar an der unteren Trägerplatte 11 festgelegt ist. Zum Antrieb der Hülse 28 ist ein diese mit Abstand umgebender innenverzahnter Antriebsring 24 vorgesehen, der einen radial von ihm abstehenden Ansatz 25 zum Einstecken eines Hebels 26 als Werkzeug zur Betätigung der Antriebsvorrichtung aufweist. Über die Verschwenkung des Hebels 26 ist der Antriebsring 24 verdrehbar, wobei der Verdrehweg des Antriebsringes 24 durch einen feststehend angebrachten Kulissenring 27 mit einer den Bewegungsweg des Hebels 26 über 90° mittels seitlicher Anschläge festlegenden Kulisse 35 begrenzt ist. Die Drehung des Antriebsringes 24 wird durch zwei in dem Zwischenraum zwischen der außenverzahnten Hülse 28 und dem innenverzahnten Antriebsring 24 angeordnete Zahnräder 29 übertragen, die in einer oberen Halteplatte 22 mittels Lagerstiften gelagert sind, wobei die Halteplatte 22 mittels Befestigungsschrauben 23 gemeinsam mit dem Kulissenring 27 an der unteren Trägerplatte 11 befestigt ist. Soweit bei dem dargestellten Ausführungsbeispiel der Schwenkweg des Hebels 26 auf 90° festgelegt ist, ist ein solcher Schwenkweg durch die an den Trägerplatten 10, 11 angebrachten Komponenten nicht beeinträchtigt. Aufgrund der Anordnung des Übersetzungsgetriebes wird aber die Hülse 28 über einen größeren Verdrehweg gedreht, so dass bei einer normalen Auslegung der Gewindesteigungen an Hülse 28 und Zapfen 18 ein entsprechend großer Fahrweg der Trägerplatten 10, 11 zueinander abgedeckt ist.

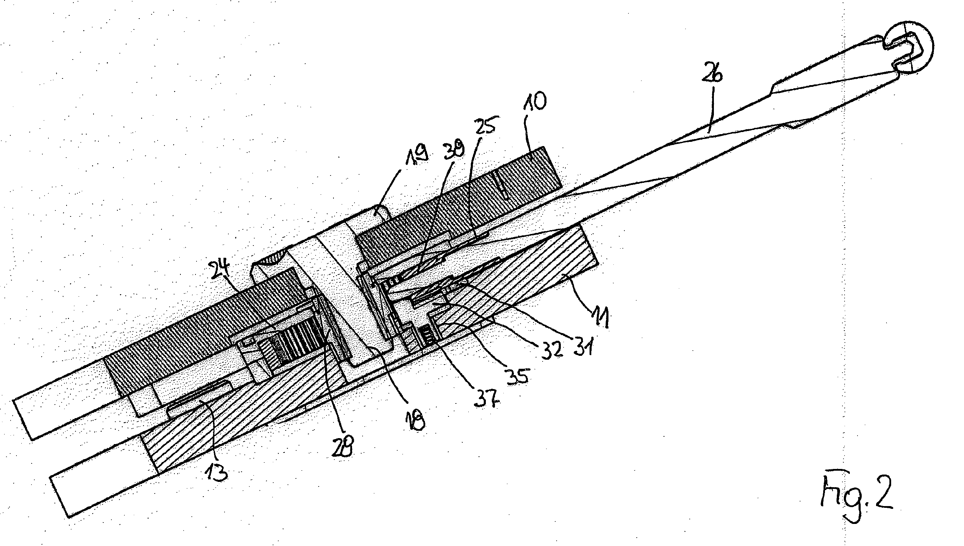

Auf der gegenüberliegenden Seite sind die Zahnräder 29 über weiterhin an diesen angebrachte Lagerstifte an einer dadurch festgelegten Verriegelungsplatte 31 gelagert, die einen radial angeordneten Schlitz 33 zum Durchtritt eines Sicherungselementes 32 aufweist. Das Sicherungselement 32 ist in einer in der unteren Trägerplatte 11 ausgebildeten Vertiefung 36 angeordnet und in einer zur Lagerplatte 11 senkrechten Ebene durch den Schlitz 33 der Verriegelungsplatte 31 hindurch verschiebbar. Hierzu ist das Sicherungselement 32 von einer in der Vertiefung 36 der Trägerplatte 11 angeordneten und das Sicherungselement 32 aus der Ebene von Trägerplatte 11 und Verriegelungsplatte 31 herausdrückenden Feder 37 beaufschlagt (Figur 2). Schlitz 36 in der Verriegelungsplatte 31 und Sicherungselement 32 in der unteren Trägerplatte 11 sind am Ende des durch die Kulisse 35 des Kulissenrings 27 festgelegten Schwenkweges des Hebels 36 angeordnet, in dessen Stellung die Trägerplatten 10, 11 in ihre Kupplungsstellung zusammengefahren sind.

Um bei in der Kupplungsstellung befindlichen Trägerplatten 10, 11 und einem von der Antriebsvorrichtung, das heißt dem Antriebsring 24 abgenommenen Hebel 26 eine selbsttätige Rückdrehung des Antriebsringes 24 beziehungsweise der daran über die Zahnräder 29 gekuppelten außenverzahnten Hülse 28 zu vermeiden, ist an dem Antriebsring 24 seinem Ansatz 25 gegenüberliegend ein Verriegelungsbereich 38 ausgebildet, der in den zwischen der Hülse 28 und dem Antriebsring 24 ausgebildeten Zwischenraum hervorsteht derart, dass dieser Verriegelungsbereich 38 den in der Verriegelungsplatte 31 angeordneten Schlitz 33 mit dem darin beweglichen Sicherungselement 32 in der entsprechenden Schwenkstellung des Hebels 26 überfährt. An der der Verriegelungsplatte 31 zugewandten Unterseite des Verriegelungsbereichs 38 des Antriebsringes 24 sind Verriegelungsrippen ausgebildet, in die das Sicherungselement 32 in der von der Feder 37 herausgedrückten Stellung eingreift und damit den Antriebsring 24 hinsichtlich einer Drehbewegung blockiert.

Um das Sicherungselement 32 entgegen der Kraft der Feder 37 in die Vertiefung 36 der unteren Lagerplatte 11 hineindrücken und damit die Drehung des Antriebsringes 24 freigeben zu können, ist die vordere Spitze des Hebels 26 mit einer umlaufenden Anschrägung versehen, der an einem in den Bewegungsweg des Hebels 26 vorstehenden Vorsprung des Sicherungselements 32 ausgebildete Schrägflächen zugeordnet sind. Diese Schrägflächen sind an dem Sicherungselement 32 derart angeordnet, dass sowohl eine radiale Einschubbewegung des Hebels 26 durch das Auflaufen seiner Anschrägung das Sicherungselement 32 in die Vertiefung 36 drückt, als auch bei einem seitlichen Anlaufen der Spitze des Hebels 26 auf das Sicherungselement 32 dieses in die Vertiefung 36 hineingedrückt wird.

In Figur 2 ist die Kupplungsstellung der Trägerplatten 10, 11 dargestellt, wobei sich der Hebel 26 noch in seiner in den Ansatz 25 des Antriebsringes 24 eingesteckten Stellung befindet und das Sicherungselement 32 in die Vertiefung 36 hingedrückt hält. Wird nun der Hebel 26 in der in Figur 2 dargestellten Position der Kupplungseinheit aus dem Ansatz 25 herausgezogen, so drückt die Feder 37 das Sicherungselement 32 in die an dem Verriegelungsbereich 38 des Antriebsringes 24 ausgebildete Verzahnung, sodass der Antriebsring 24 festgelegt ist. In dieser Stellung ist eine Rückdrehung des Antriebsringes 24 und damit der Hülse 28 in die Freigabestellung der Trägerplatten 10, 11 nicht möglich.

Wird der Hebel 26 erneut in den Ansatz 25 des Antriebsringes 24 eingesteckt, so drückt die mit Anlaufschrägen versehene vordere Spitze des Hebels 26 das Sicherungselement 32 entgegen der Kraft der Feder 37 in die Vertiefung 36 hinein, sodass der Antriebsring 24 verdreht werden kann. Wird der Hebel aus der Freigabestellung der Trägerplatten 10, 11 heraus in Richtung von deren Kupplungsstellung verschwenkt, so laufen die an der Hebelspitze ausgebildeten Anlaufschrägen seitlich auf die zugeordnete Anlaufschräge am Sicherungselement 32 auf, so dass auch bei dieser Schwenkbewegung das Sicherungselement 32 in die Vertiefung 36 hineingedrückt wird und der Hebel 26 beziehungsweise der Antriebsring 24 mit daran gekuppelter Hülse 28 ihre der zusammengefahrenen Kupplungsstellung der Trägerplatten 10, 11 entsprechende Drehstellung einnehmen können.

Die in der vorstehenden Beschreibung, den Patentansprüchen, der Zusammenfassung und der Zeichnungen offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Multi-Kupplungseinheit für die Kupplung von Komponenten wie Rohrleitungen, Schläuchen, Messleitungen und ähnlichem miteinander umfassend zwei miteinander verbindbare Trägerplatten (10, 11) als Träger der durch die Betätigung eines einen Bestandteil der Multi-Kupplungseinheit bildenden Werkzeuges zusammenzufahrenden und dadurch zu verbindenden Komponenten, wobei in dem zwischen den Trägerplatten (10, 11) auch bei gekuppelten Komponenten verbleibenden Zwischenraum eine aus zwei jeweils an den Trägerplatten (10, 11) angeordneten Gewindeteilen (18, 28) bestehende Antriebsvorrichtung für das Zusammenfahren der Trägerplatten (10, 11) und deren bei gekuppelten Komponenten bewirkte Verbindung miteinander vorgesehen ist, wobei ein Gewindeteil (18) feststehend mit einer Trägerplatte (10) verbunden und das andere Gewindeteil (28) drehbar, aber axial unverschiebbar an der anderen Trägerplatte angeordnet ist, und das drehbar angeordnete Gewindeteil (28) von dem an das Gewindeteil (28) angesetzten Werkzeug (26) beaufschlagt ist und durch das mittels der Verschwenkung des Werkzeuges (26) bewirkte Ineinanderschrauben der Gewindeteile (18, 28) der Abstand der Trägerplatten (10, 11) zueinander zwischen einer Freigabestellung und einer die Kupplung der an den Trägerplatten (10, 11) angebrachten Komponenten miteinander bewirkenden Kupplungsstellung veränderbar ist, wobei die Antriebsvorrichtung für das Zusammenfahren der Trägerplatten (10, 11) von einem in dem Zwischenraum zwischen den Trägerplatten (10, 11) angeordneten und das drehbare Gewindeteil (28) beaufschlagenden Antriebsring (24) gebildet ist und das in dem zwischen den Trägerplatten (10, 11) befindlichen Raum eingesetzte Werkzeug (26) an dem Antriebsring (24) angreift, **dadurch gekennzeichnet, dass** zwischen dem Antriebsring (24) und dem drehbaren Gewindeteil (28) ein Übersetzungsgetriebe (29) angeordnet ist derart, dass eine Verschwenkung des Werkzeuges (26) und die dadurch bewirkte Verdrehung des drehbar angeordneten Gewindeteils (28) den veränderbaren Abstand der Trägerplatten (10, 11) zueinander abdecken.

2. Multi-Kupplungseinheit nach Anspruch 1, **dadurch gekennzeichnet, dass** das feststehend an einer Trägerplatte (10) angebrachte Gewindeteil aus einem mit Außengewinde versehenen Zapfen (18) besteht, dem als an der anderen Trägerplatte (11) vorgesehenem Gewindeteil eine drehbar an der Trägerplatte (11) gehalterte Hülse (28) mit Innengewinde zugeordnet ist.

3. Multi-Kupplungseinheit nach Anspruch 2, **dadurch gekennzeichnet, dass** die Steigung der Gewinde von Zapfen (18) und Hülse (28) eine derartige Steilheit aufweist, dass eine Verdrehung der Hülse (28) um bis zu 90° den veränderbaren Abstand der Trägerplatten (10, 11) zueinander abdeckt.

4. Multi-Kupplungseinheit nach einem der Ansprüche 1 bis 3, **dadurch gekennzeichnet, dass** eine Sicherungsvorrichtung zum Festlegen der Hülse (28) in deren bei in die Kupplungsstellung zusammengefahrenen Trägerplatten (10, 11) gegebenen Drehstellung vorgesehen ist.

5. Multi-Kupplungseinheit nach Anspruch 3 und 4, **dadurch gekennzeichnet, dass** in der Antriebsvorrichtung ein durch das Einstecken des Werkzeuges in einen zugeordneten Ansatz (25) eines Antriebsringes (24) als Teil des Übersetzungsgetriebes beaufschlagbares Sicherungselement (32) vorgesehen ist, welches in der eingesteckten Stellung des Werkzeuges (26) die Drehung des Antriebsringes (24) freigibt und bei abgenommenem Werkzeug mit dem Antriebsring (24) verrastet und dadurch die Hülse (28) und die Trägerplatten (10, 11) fixiert.

6. Multi-Kupplungseinheit nach einem der Ansprüche 1 bis 5, **dadurch gekennzeichnet, dass** an einer Trägerplatte (10) zwei einander gegenüberliegend angeordnete Führungsstangen (13) angebracht sind, die durch in der anderen Trägerplatte (11) ausgebildete Durchführungen (17) hindurchführbar sind.

## Claims

1. A multi-coupling unit for coupling together components such as pipeline, hoses, measurement lines and suchlike, comprising two carrier plates (10, 11) connectable to one another as supports of the components to be brought together by the operation of a tool forming a component part of the multi-coupling unit and thus to be connected, wherein a drive device for bringing together the carrier plates (10, 11) and for their connection brought about with the coupled components, said drive device comprising two threaded parts (18, 28) disposed respectively on the carrier plates (10, 11), is provided in the intermediate space remaining between the carrier plates (10, 11) even when the components are coupled, wherein one threaded part (18) is connected to one carrier plate (10) in a fixed manner and the other threaded part (28) is disposed rotatably, but axially non-displaceably on the other carrier plate, and the threaded part (28) disposed rotatably is acted upon by the tool (26) placed on the threaded part (28) and, as a result of the screwing of the threaded parts (18, 28) into one another brought about by means of the swivelling of the tool (26), the distance of the carrier plates (10, 11) from one another is variable between a release position and a coupling position bringing about the coupling together of the components fitted to the carrier plates (10, 11), wherein the drive device for bringing the carrier plates (10, 11) together is constituted by a drive ring (24) disposed in the intermediate space between the carrier plates (10, 11) and acting on the rotatable threaded part (28) and the tool (26) inserted in the space between the carrier plates (10, 11) engages with the drive ring (24), **characterised in that** a transmission gear unit (29) is disposed between the drive ring (24) and the rotatable threaded part (28), in such a way that swivelling of the tool (26) and the rotation of the rotatably disposed threaded part (20) thereby brought about cover the variable distance of the carrier plates (10, 11) from one another.

2. The multi-coupling unit according to claim 1, **characterised in that** the threaded part fitted in a fixed manner to a carrier plate (10) comprises a peg (18) provided with an external thread, to which a sleeve (28) with an internal thread held rotatably to the other carrier plate (11) is assigned as a threaded part provided on the other carrier plate (11).

3. The multi-coupling unit according to claim 2, **characterised in that** the pitch of the thread of peg (18) and sleeve (28) has a pitch such that a rotation of the sleeve (28) through up to 90° covers the variable distance of the carrier plates (10, 11) from one another.

4. The multi-coupling unit according to any one of claims 1 to 3, **characterised in that** a securing device is provided for fixing the sleeve (28) in its rotational position produced when carrier plates (10, 11) are brought together into the coupling position.

5. The multi-coupling unit according to claim 3 or 4, **characterised in that** a securing element (32) that can be acted on by the insertion of the tool into an assigned projection (25) of a drive ring (24) as part of the transmission gear unit is provided in the drive device, said securing element releasing the rotation of the drive ring (24) in the inserted position of the tool (26) and, when the tool is removed, locking home with the drive ring (24) and thereby fixing the sleeve (28) and the carrier plates (10, 11).

6. The multi-coupling unit according to any one of claims 1 to 5, **characterised in that** two guide rods (13) disposed mutually opposite one another are fitted to a carrier plate (10), said guide rods being able to be passed through lead-throughs (17) constituted in the other carrier plate (11).

## Revendications

1. Unité de couplage multiple pour le couplage de composants tels que conduites tubulaires, tuyaux flexibles, lignes de mesure et similaires, comprenant deux plaques de support (10, 11) pouvant être reliées l'une à l'autre en tant que supports des composants à rassembler par l'actionnement d'un outil formant un composant de l'unité de couplage multiple et à relier ce faisant, sachant qu'est prévu, dans l'espace intermédiaire restant entre les plaques de support (10, 11) aussi dans le cas de composants couplés, un dispositif d'entraînement composé de deux parties filetées (18, 28) disposées respectivement au niveau des plaques de support (10, 11) et destiné au rassemblement des plaques de support (10, 11) et à leur liaison réalisée lorsque les composants sont couplés, sachant qu'une partie filetée (18) est reliée de manière solidaire à une plaque de support (10) et que l'autre partie filetée (28) est agencée rotative par rapport à l'autre plaque de support, mais immobile en coulissement axial, et sachant que la partie filetée (28) agencée rotative est soumise à l'action de l'outil (26) placé au niveau de la partie filetée (28), et que, par le vissage l'une dans l'autre des parties filetées (18, 28) résultant du pivotement de l'outil (26), la distance entre les plaques de support (10, 11) peut varier entre une position de libération et une position de couplage entraînant le couplage les uns aux autres des composants mis en place au niveau des plaques de support (10, 11), sachant que le dispositif d'entraînement est formé, pour le rassemblement des plaques de support (10, 11), par une bague d'entraînement (24) disposée dans l'espace intermédiaire entre les plaques de support (10, 11) et contraignant la partie filetée rotative (28), et sachant que l'outil (26) inséré dans l'espace se trouvant entre les plaques de support (10, 11) vient en prise avec la bague d'entraînement (24), **caractérisé en ce qu'**un organe multiplicateur (29) est disposé entre la bague d'entraînement (24) et la partie filetée rotative (28) de sorte qu'un pivotement de l'outil (26) et la rotation en résultant de la partie filetée rotative (28) couvrent la distance variable entre les plaques de support (10, 11).

2. Unité de couplage multiple selon la revendication 1, **caractérisée en ce que** la partie filetée rapportée de manière solidaire à une plaque de support (10) est composée d'une broche (18) pourvue d'un filetage extérieur, à laquelle est associé, en tant que partie filetée prévue au niveau de l'autre plaque de support (11), un manchon (28) maintenu de manière rotative au niveau de la plaque de support (11) et doté d'un filetage intérieur.

3. Unité de couplage multiple selon la revendication 2, **caractérisée en ce que** le pas du filetage de la broche (18) et du manchon (28) présente une pente telle qu'une rotation du manchon (28) d'une valeur pouvant aller jusqu'à 90° couvre la distance variable entre les plaques de support (10, 11).

4. Unité de couplage multiple selon l'une quelconque des revendications 1 à 3, **caractérisée en ce qu'**un dispositif de sécurité servant à immobiliser le manchon (28) est prévu dans la position de rotation de ce dernier, laquelle est atteinte lorsque les plaques de support (10, 11) sont rassemblées dans la position de couplage.

5. Unité de couplage multiple selon la revendication 3 et 4, **caractérisée en ce qu'**est prévu, dans le dispositif d'entraînement, un élément de sécurité (32) pouvant être sollicité, en tant que partie de l'organe multiplicateur, du fait de l'insertion de l'outil dans un épaulement (25) associé d'une bague d'entraînement (24), lequel élément de sécurité libère, dans la position insérée de l'outil (26), la rotation de la bague d'entraînement (24), et s'enclenche avec la bague d'entraînement (24) lorsque l'outil est retiré, et fixe ainsi le manchon (28) et les plaques de support (10, 11).

6. Unité de couplage multiple selon l'une quelconque des revendications 1 à 5, **caractérisée en ce que** deux tiges de guidage (13) disposées de manière à se faire face sont mises en place au niveau d'une plaque de support (10), lesquelles tiges de guidage (13) peuvent être guidées à travers des passages (17) réalisés dans l'autre plaque de support (11).
